# EUROPÄISCHE PATENTSCHRIFT

(11) **EP 1 475 522 B1**
(45) Veröffentlichungstag und Bekanntmachung des Hinweises auf die Patenterteilung: **12.10.2005**
(21) Anmeldenummer: 04007938.6
(22) Anmeldetag: 01.04.2004
(51) Int. Cl.: F01N 3/28, B01D 53/94, F01N 3/023

(54) **Kombinierte Abgasnachbehandlungs-/Schalldämpfungsvorrichtung im Abgasstrang einer Brennkraftmaschine**
Combined exhaust gas treating/sound attenuation device in the exhaust line of an internal combustion engine
Dispositif combiné de traitement/ d'amortissement de gaz d' échappement dans la ligne d'échappement d'un moteur à combustion interne

(30) Priorität: 11.04.2003 DE 10316802
(43) Veröffentlichungstag der Anmeldung: 10.11.2004
(73) Patentinhaber: MAN Nutzfahrzeuge Aktiengesellschaft, 80976 München (DE); ROTH-TECHNIK AUSTRIA Gesellschaft m.b.H., 3193 St.Aegyd a.N. (AT)
(72) Erfinder: Eberhard, Jacob, Dr.Dipl.-Chemiker, 82152 Krailling (DE); Mai, Hans-Peter, 76456 Kuppenheim (DE)

(56) Entgegenhaltungen:
- EP-A- 0 816 648
- EP-A- 1 258 606

## Beschreibung

Die Erfindung betrifft eine kombinierte Abgasnachbehandlungs-/Schalldämpfungsvorrichtung im Abgasstrang einer Brennkraftmaschine mit Merkmalen gemäß dem Oberbegriff des Anspruchs 1.

Nachfolgend ist die Rede von PM-KAT-Systemen. PM-KAT® ist eine Marke der Anmelderin MAN Nutzfahrzeuge Aktiengesellschaft. Unter PM-KAT-Systemen sind zu verstehen nichtblockierende Mittel zur Minderung von Rußpartikeln im Abgas von Dieselmotoren. Solche PM-KAT-Systeme bestehen aus wenigstens einem Voroxidationskatalysator - nachfolgend nur noch V-Kat genannt -, dessen Träger mit Platin als Aktivkomponente beschichtet ist, und einem nachgeschalteten - insbesondere katalytischen - Partikelabscheider, nachfolgend gekürzt PM-Abscheider genannt. Ein solcher PM-Abscheider könnte z. B. die Konfiguration/Struktur gemäß der DE 100 20 170 C1 haben.

Für Lastkraftwagen ist bisher die Anordnung eines V-Kats in einem möglichst nah bei der Brennkraftmaschine angeordneten Vorschalldämpfer und eines oder mehrerer PM-Abscheider im Hauptschalldämpfer bekannt geworden, siehe die DE 101 23 358 A1.

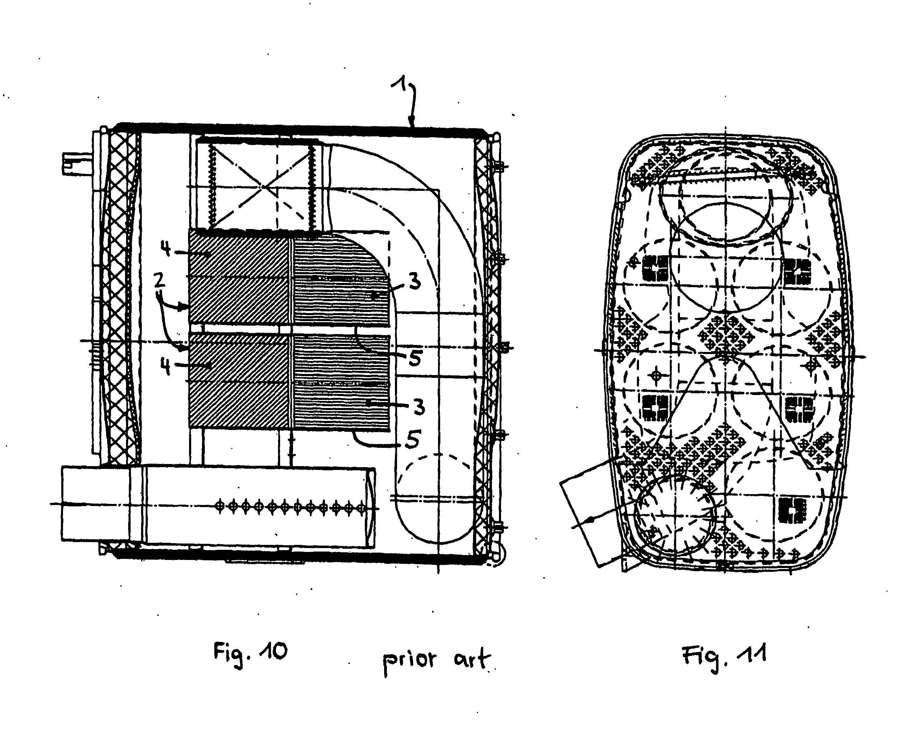

Außerdem ist die Integration eines PM-KAT-Systems in einen Nutzfahrzeug-Schalldämpfer auf dem 23. Internationalen Wiener Motorensymposium am 25. und 26.04.2002 offenbart und in den Fortschrittsberichten, VDI-Reihe 12 Nr. 490, Band 2 Düsseldorf, VDI-Verlag 2002, Seiten 196-216 dokumentiert worden. Die Figuren 10 und 11 zeigen dieses PM-KAT-System dieser Literaturstelle auf. Hieraus ist ersichtlich, dass im Schalldämpfer 1 vier Abgasnachbehandlungsmodule 2 für Paralleldurchströmung angeordnet sind, wobei jeder derselben in einem Mantelrohr 5 eingefasst einen kreiszylindrischen V-Kat 3 und unmittelbar koaxial anschließend einen durchmesseridentischen kreiszylindrischen PM-Abscheider 4 aufweist. Diese Integration des PM-KAT-Systems in den Schalldämpfer 1 bietet sich dort an, wenn bei einem Lastkraftwagen oder Omnibus kein Platz für die Unterbringung eines motornahen Vorschalldämpfers vorhanden ist. Der Nachteil dieser Integrationslösung ist aber ein um das Volumen der V-Kats verringertes Volumen der PM-Abscheider, weil die Außenabmessungen des Schalldämpfers 1 fahrzeugbedingt vorgegeben und daher nicht vergrößerbar sind. Dies führt zu unzureichenden Abscheideraten von weit unter 50 %. Auch eine Erhöhung der Platinkonzentration im V-Kat und eine zusätzliche Beschichtung der inneren Strukturen des/der PM-Abscheider war nicht zielführend im Hinblick auf eine Erhöhung der Abscheiderate/Konversion im ETC (european transient cycle). Platin ist sehr teuer und bestimmt somit in sehr wesentlichem Umfang die Kosten des Gesamtsystems.

Es ist daher Aufgabe der Erfindung, in einer kombinierten Abgasnachbehandlungs-/Schalldämpfungsvorrichtung der gattungsgemäßen Art einen V-Kat und PM-Abscheider mit einem solchen Volumen und in solcher Form und Ausstattung im Schalldämpfer unterzubringen, dass Partikelkonvertierungsraten von mindestens 50 %, vorzugsweise jedoch wesentlich über 50 % im ETC bei minimiertem Platineinsatz im V-Kat erzielt werden können.

Diese Aufgabe ist bei einer kombinierten Abgasnachbehandlungs-/Schalldämpfungsvorrichtung der gattungsgemäßen Art erfindungsgemäß durch die im Kennzeichen des Anspruchs 1 angegebenen Merkmale gelöst.

Vorteilhafte Ausgestaltungen und Details von Anwendungsbeispielen sind in den Unteransprüchen angegeben.

Gegenüber der bekannten Lösung gemäß Fig. 10 und 11 mit vier V-Kats ist bei der Erfindung das Volumen des einzigen V-Kats um Faktor 2,5-3,5 kleiner, außerdem reduziert sich der Platineinsatz für die Beschichtung des V-Kat je nach Ausführungsbeispiel um Faktor 3,3-11,7. Das spart enorme Kosten ein. Außerdem wird durch diesen nur einen relativ kleinen V-Kat mehr Platz für den/die PM-Abscheider geschaffen und im Ergebnis eine signifikante Erhöhung der Partikelkonversion erzielt.

Nachstehend ist die Erfindung anhand mehrerer in der Zeichnung dargestellter Beispiele noch näher erläutert. In der Zeichnung zeigen:
- Fig. 1: im Längsschnitt und Fig. 2 in Vorderansicht ein erstes Ausführungsbeispiel der Erfindung,
- Fig. 3: im Längsschnitt und Fig. 4 in Vorderansicht ein zweites Ausführungsbeispiel der Erfindung,
- Fig. 5: im Längsschnitt und Fig. 6 in Vorderansicht ein drittes Ausführungsbeispiel der Erfindung,
- Fig. 7: im Längsschnitt und Fig. 8 in Vorderansicht ein viertes Ausführungsbeispiel der Erfindung, und
- Fig. 9: eine Tabelle, in der in den zehn Querzeilen die Daten von zehn verschiedenen beispielhaften Kombinationen eines V-Kat mit einem oder mehreren PM-Abscheider(n) angegeben sind.
(Fig. 10 und 11 dienen nur zur Verdeutlichung des Standes der Technik, von dem die Erfindung ausgeht.)

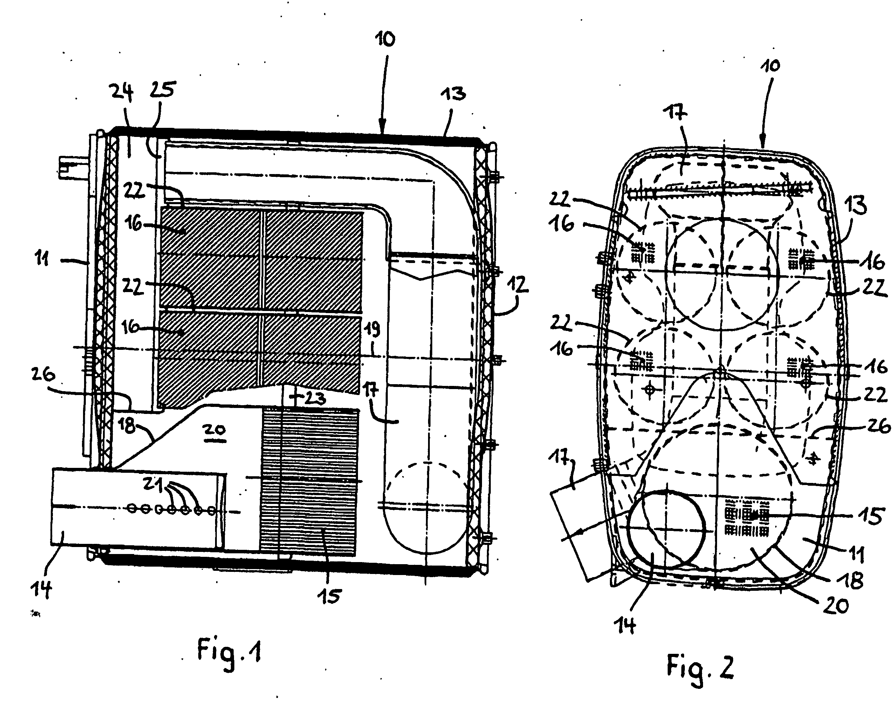

Die Figuren 1 bis 8 zeigen eine kombinierte Abgasnachbehandlungs-/Schalldämpfungsvorrichtung, die im Abgasstrang einer Brennkraftmaschine, insbesondere Dieselmotor eines Nutzfahrzeuges wie Lastkraftwagen oder Omnibus angeorndet ist. Diese Vorrichtung weist einen Schalldämpfer 10 auf, der räumlich durch eine vordere Stirnwand 11, eine hintere Stirnwand 12 und eine Umfangsaußenwand 13 begrenzt ist. Letztere kann im Querschnitt rund, oval, quadratisch oder etwa rechteckig und in Längsrichtung gesehen zylindrisch oder tonnenförmig ausgebuchtet ausgebildet sein. In den Innenraum des Schalldämpfers 10 führt ein Abgaseintrittsrohr 14 hinein, das über eine nicht dargestellte Abgasleitung die Abgase der zugehörigen Brennkraftmaschine zugeführt bekommt. In den Innenraum des Schalldämpfers 10 sind außerdem ein den NO₂-Anteil im durchströmenden Abgas aufgrund seiner Platinbeschichtung signifikant erhöhender Voroxidationskatalysator 15 - nachfolgend V-Kat 15 genannt - und wenigstens ein insbesondere katalytischer Partikelabscheider 16 - nachfolgend PM-Abscheider 16 genannt - eingebaut. Mit 17 ist ein schalldämpfendes Endrohr bezeichnet, mit dem gereinigtes Abgas aus dem Innenraum des Schalldämpfers 10 in die Atmosphäre ausgeleitet wird. Nachzubehandelndes Abgas wird demnach über das Abgaseintrittsrohr 14 in den Schalldämpfer 10 eingespeist, durchströmt dort zunächst den V-Kat 15 und anschließend den/die PM-Abscheider 16 und wird anschließend gereinigt und mittelbar schallgedämpft über das Endrohr 17 wieder aus dem Schalldämpfer 10 ausgeleitet. Die Stirnwände 11, 12 und - soweit erforderlich - auch die Umfangsaußenwand 13 sowie das Endrohr 17 sind mit Schalldämpfungsmaterial beschichtet. Zur Schalldämpfung tragen auch spezielle Ausbildungen im Bereich der Einspeisung und Ausleitung des Abgases sowie Querwände innerhalb des Schalldämpfers bei, auf die weiter hinten noch näher eingegangen ist.

In den drei Beispielen gemäß Fig. 1, 2 und 3, 4 und 5, 6 ist der V-Kat kreiszylindrisch ausgebildet und in einem Gehäuse 18 aus austenitischem oder ferritischen Edelstahl eingebaut, und zwar parallel zur Längsachse 19 des Schalldämpfers 10. In den Eintrittsraum 20 dieses sich ausgehend von der vorderen Stirnwand 11 trichterförmig erweiternden und dann zylindrisch weitergehenden Gehäuses 18 ragt das Abgaseintrittsrohr 14 ein gewisses Maß hinein und weist dort vorzugsweise eine Perforation bzw. Löcher 21 auf, so dass das zugeführte Abgas aus dem Abgaseintrittsrohr 14 sowohl radial als auch axial in den Eintrittsraum 20 austreten und dann durch den V-Kat 15 strömen kann. Letzterer ist dem zylindrischen Abschnitt des Gehäuses 18 eingefasst.

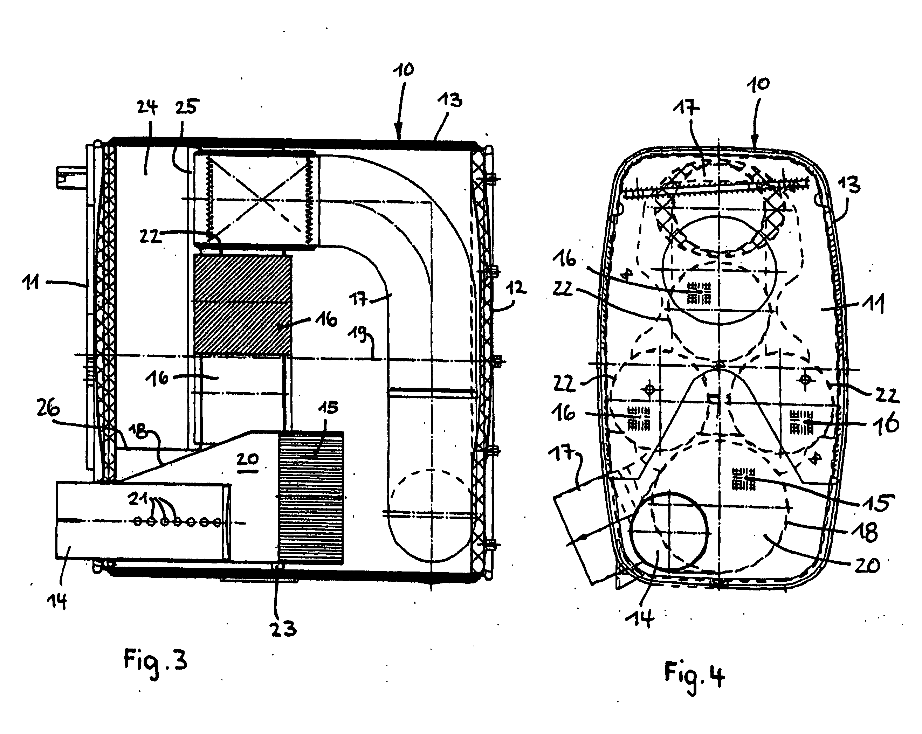

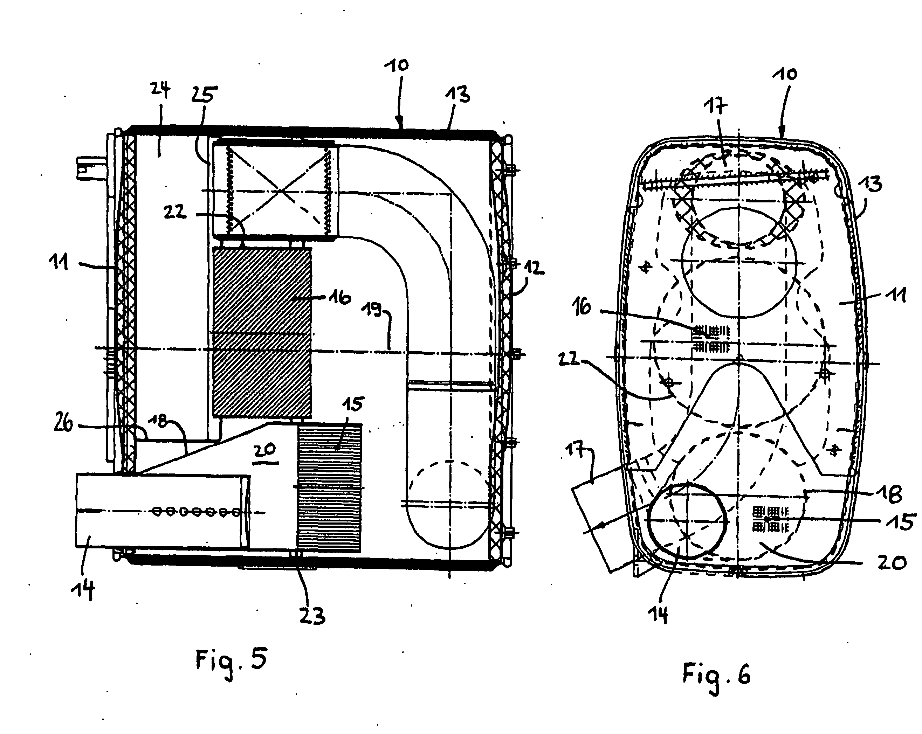

Jeder der in diesen drei Beispielen vorhandenen PM-Abscheider 16 ist kreiszylindrisch ausgebildet, ebenfalls in einem Gehäuse 22 aus austenitischem oder ferritischen Edelstahl eingebaut und zusammen mit diesem parallel zur Achse 19 des Schalldämpfers in diesem angeordnet. Dabei sind im Beispiel gemäß Fig. 1, 2 vier, im Beispiel gemäß Fig. 3, 4 drei und im Beispiel gemäß Fig. 5, 6 ein solches Gehäuse 22 mit eingebautem PM-Abscheider 16 oberhalb bzw. neben dem Gehäuse 18 mit dem darin eingebauten V-Kat 15 angeordnet. Zur Lagefixierung der Gehäuse 20 und 22 ist im Schalldämpfer eine Querwand 23 vorgesehen, die vorzugsweise durch eine Perforation oder Löcher gasdurchlässig gemacht ist, sodass das aus dem V-Kat 15 nach seiner Durchströmung austretende Abgas sich vor Durchströmung des/der PM-Abscheider 16 außen um diese verteilen und daher vorwärmen bzw. auf einer günstigen Betriebstemperatur halten kann. Bei allen drei Beispielen der Fig. 1 bis 6 münden der/die PM-Abscheider 16 in eine Abströmkammer 24 aus, die innerhalb des Schalldämpfers 10 durch Wände 25 und 26 gasdicht gegenüber dem weiteren Innenraum des Schalldämpfers 10 ausgebildet ist. Mit dieser Abströmkammer 24 kommuniziert auch das Endrohr 17. Die zur Querwand 23 parallele Wand 25 umfasst mit Durchbrüchen die austrittsseitigen Endbereiche des/der PM-Abscheidergehäuse 22 und den Eintrittsbereich des Endrohres 17 jeweils gasdicht und trägt so auch mit zu deren/dessen Lagefixierung im Schalldämpfer 10 bei.

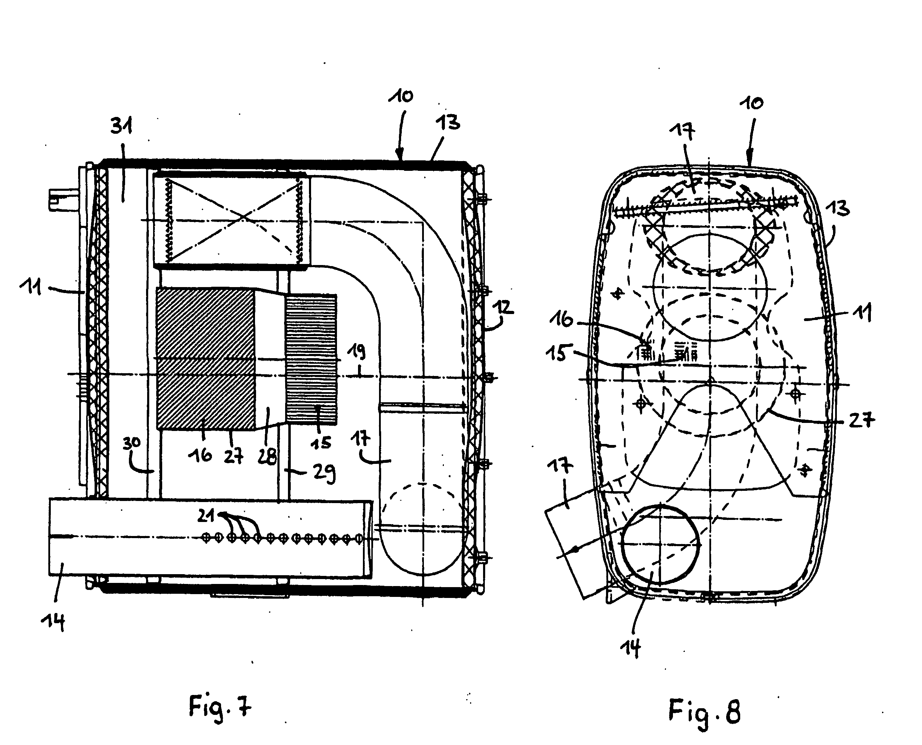

Beim Ausführungsbeispiel gemäß Fig. 7, 8 sind der V-Kat 15 und der eine hier verwendete PM-Abscheider 16 jeweils kreiszylindrisch, aber durchmesserunterschiedlich ausgebildet und in einem gemeinsamen Gehäuse 27 axial hintereinander, aber durch eine sich von der Austrittsfläche des V-Kats 15 zur Eintrittsfläche des PM-Abscheiders 16 trichterförmig erweitemde Überströmkammer 28 getrennt, eingebaut. Das Abgaseintrittsrohr 14 ist hier relativ weit in den Innenraum des Schalldämpfers 10 bis kurz vor das Endrohr 17 hinein verlängert und ebenfalls mit einer Perforation bzw. Löchern 21 ausgestattet. Das Gehäuse 27 mit eingebautem V-Kat 15 und PM-Abscheider 16 ist oberhalb des Abgaseintrittsrohres 14 und parallel zur Achse 19 des Schalldämpfers 10 in diesen eingebaut und intern desselben ebenso wie das Abgaseintrittsrohr 14 und das Endrohr 17 durch zwei Querwände 29, 30 gehalten. Dabei ist die Querwand 29 durch Löcher oder eine Perforation gasdurchlässig gemacht, die andere hierzu parallele Querwand 30 dagegen ist gasdicht ausgebildet und begrenzt so in Verbindung mit der vorderen Stirnwand 11 und der Umfangsaußenwand 13 eine Abströmkammer 31. In diese mündet der PM-Abscheider 16 aus und von ihr geht das Endrohr 17 ab. Das Gehäuse 27, das Endrohr 17 und das Abgaseintrittsrohr 14 sind dabei in Durchbrüchen der Querwand 30 gasdicht eingefasst aufgenommen. Zwischen der Querwand 30 und der hinteren Stirnwand 12 ist der Innenraum des Schalldämpfers 10 wegen der Gasdurchlässigkeit der Querwand 29 mit aus den Abgaseintrittsrohr radial und axial austretenden Abgas füllbar, so dass auch bei dieser Variante das Gehäuse 27 mit V-Kat 15 und PM-Abscheider 16 vorwärmbar bzw. auf günstiger Betriebstemperatur haltbar ist.

Generell erfüllen alle Ausführungsbeispiele folgende erfindungsgemäßen Merkmale:
a) Die freie Abgaseintrittsfläche des V-Kats 15 ist wesentlich kleiner als die Abgaseintrittsfläche des/der PM-Abscheider 16.
b) Das Aspektverhältnis AR = Länge (I) / Durchmesser_{eff} (Ø_{eff}) liegt beim V-Kat 15 etwa zwischen 0,4 und 0,6.
c) Das Aspektverhältnis AR = Länge (I) / Durchmesser_{eff} (Ø_{eff}) des/der PM-Abscheider 16 liegt etwa zwischen 0,5 und 1,0.
d) Das Volumen des V-Kat 15 liegt etwa zwischen 2,5 und 4 Liter, das Volumen des/aller PM-Abscheider 16 liegt etwa zwischen 5,5 und 22 Liter und das Verhältnis Volumen V-Kat 15 / Volumen des/aller PM-Abscheider 16 liegt etwa zwischen 0,15 und 0,55.
e) Die Relation Aspektverhältnis des/aller PM-Abscheider 16 / Aspektverhältnis V-Kat 15 liegt etwa zwischen 1,05 und 2,2.
f) Bei maximalem Abgas-Volumenstrom [Nm³/h] soll die Kanalgeschwindigkeit KG (= Abgasvolumenstrom/freie Abgaseintrittsfläche) im V-Kat 15 höher als 8 m/sec und in dem/den PM-Abscheider(n) 16 höher als 5 m/sec sein, wobei der maximale Abgas-Volumenstrom durch den maximal erlaubten Druckverlust und den im Hinblick auf die Funktionalität der abgasliefernden Brennkraftmaschine maximal zulässigen Abgasgegendruck begrenzt ist.

Der unter b) und c) genannte Begriff Ø_{eff} bedeutet den eintrittswirksamen Durchmesser der runden Eintrittsfläche des V-Kat 15 und des PM-Abscheiders 16 (falls nur einer verwendet wird) oder bei mehreren PM-Abscheidem 16 deren wirksame Gesamteintrittsfläche angenommen als Kreisfläche und der sich daraus ergebende Durchmesser.

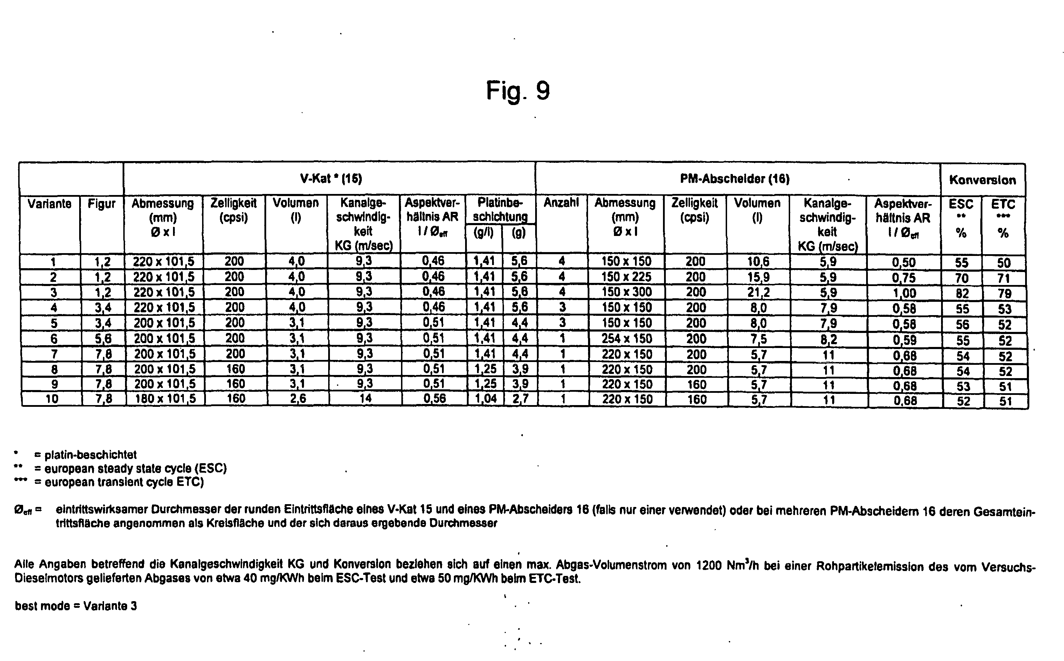

In der Tabelle in Fig. 9 sind zehn erprobte Beispiele von Kombinationen verschiedener V-Kats 15 mit einer unterschiedlichen Anzahl verschiedener PM-Abscheider 16 und die hieraus resultierenden Konversionsraten (Partikelabscheideraten) nach ESC (european steady state cycle) und ETC (european transient cycle) aufgezeigt. Zur Vermeidung von Wiederholungen soll diese Tabelle gemäß Fig. 9 und deren Inhalt als Bestandteil dieser Beschreibung gelten. Die Erprobung der einzelnen Varianten erfolgte mit einem Dieselmotor, der Abgas mit einer Rohpartikelemission in der Größenordnung von etwa 40 mg/KWh beim ESC-Test und von etwa 50 mg/KWh beim ETC-Test jeweils mit einem maximalen Abgas-Volumenstrom von 1200 Nm³/h lieferte. Mit diesem maximalen Abgas-Volumenstrom ergeben sich die in der Tabelle gemäß Fig. 9 angegebenen Kanalgeschwindigkeiten und Konversionsraten.

Im Beispiel gemäß Fig. 1, 2 wurde versucht, innerhalb von 3 Varianten (1 bis 3) bei jeweils gleichen V-Kat 15 durch Verwendung durchmessergleicher, aber unterschiedlich langer PM-Abscheider 16 die Konversionsrate zu erhöhen. Die beste-mode-Lösung stellt Variante 3 dar. Dabei zeigte sich, dass je länger der/die PM-Abscheider 16 trotz relativ kleinem Durchmesser ist/sind, desto höher ist die Konversionsrate. Die langgestreckte Ausführung der PM-Abscheider 16 ist daher sehr günstig.

Im Beispiel gemäß Fig. 3, 4 wurden entsprechend den Varianten 4 und 5 jeweils drei gleichen PM-Abscheidern 16 jeweils unterschiedliche V-Kat 15 zugeordnet.

Im Beispiel gemäß Fig. 5, 6 wurde bei Variante 6 ein PM-Abscheider 16 mit einem ähnlichen Gesamtvolumen wie bei den drei PM-Abscheidem 16 der Varianten 4, 5 in Verbindung mit dem gleichen V-Kat 15 verwendet. Es stellten sich dabei vergleichbar gute Konversionsraten ein.

Im Beispiel gemäß Fig. 7, 8 wurde in den vier Varianten 7 bis 10 jeweils ein PM-Abscheider 16 mit unterschiedlicher Zelligkeit mit V-Kats 15 kombiniert, die entweder eine unterschiedliche Zelligkeit oder einen unterschiedlichen Durchmesser aufwiesen.

Im Ergebnis erbrachten alle Varianten ETC-Konversionsraten von mindestens 50 %, in der Spitze wurden bei Variante 3 phänomenale 79 % erreicht.

In den erprobten Varianten 1 bis 10 kamen PM-Abscheider 16 ohne Platinbeschichtung zur Anwendung. Es gibt aber durchaus auch Anwendungsfälle, in denen die Verwendung platinbeschichteter PM-Abscheider 16 notwendig ist. Die Erfindung erstreckt sich somit sowohl auf unbeschichtete als auch platin beschichtete PM-Abscheider 16. Außerdem ist es möglich V-Kat 15 und PM-Abscheider 16 mit anderen als den angegebenen Zelligkeiten zu verwenden. Ferner ist es abweichend von den dargestellten Beispielen selbstverständlich auch möglich, einen V-Kat 15 mit zwei, fünf oder sechs PM-Abscheidern 16 zu kombinieren, falls dies der Platz im Schalldämpfer 10 und/oder der zu erzielende Schalldämpfungsgrad zulässt.

## Patentansprüche

1. Kombinierte Abgasnachbehandlungs-/Schalldämpfungsvorrichtung im Abgasstrang einer Brennkraftmaschine, insbesondere Dieselmotor eines Nutzfahrzeuges wie Lastkraftwagen oder Omnibus, mit einem Schalldämpfer, der räumlich durch eine vordere und hintere Stirnwand sowie eine Umfangsaußenwand begrenzt ist und in dessen Innenraum wenigstens ein den NO₂-Anteil im durchströmenden Abgas signifikant erhöhender Voroxidationskatalysator und wenigstens ein - insbesondere katalytischer - Partikelabscheider eingebaut sind, wobei nachzubehandelndes Abgas über ein Eintrittsrohr in den Schalldämpfer einleitbar ist und nach Durchströmung des Voroxidationskatalysators sowie des/der Partikelabscheider gereinigt und mittelbar schallgedämpft wieder aus dem Schalldämpfer ausleitbar ist, **dadurch gekennzeichnet,**
- **dass** die freie Abgaseintrittsfläche des Voroxidationskatalysators (15) wesentlich kleiner als die freie Abgaseintrittsfläche des/der Partikelabscheider (16) ist,
- **dass** das Aspektverhältnis AR = I / Ø_{eff} beim Voroxidationskatalysator (15) etwa zwischen 0,4 und 0,6 liegt,
- **dass** das Aspektverhältnis AR = I / Ø_{eff} des/der Partikelabscheider (16) etwa zwischen 0,5 und 1,0 liegt,
- **dass** das Volumen des Vorkatalysators (15) zwischen etwa 2,5 und 4 Liter, das Volumen des/aller Partikelabscheider (16) zwischen etwa 5,5 und 22 Liter und das Verhältnis Volumen Vorkatalysator / Volumen des/aller Partikelabscheider zwischen etwa 0,15 und 0,55 liegt,
- **dass** die Relation Aspektverhältnis Partikelabscheider (16) / Aspektverhältnis Vorkatalysator (15) zwischen etwa 1,05 und 2,2 liegt, und
- **dass** bei maximalem Abgas-Volumenstrom [Nm³/h] die Kanalgeschwindigkeit im Voroxidationskatalysator (15) mehr als 8 m/sec und in dem/den Partikelabscheider(n) (16) über 5 m/sec liegt, wobei der maximale Abgasvolumenstrom durch den maximal erlaubten Druckverlust und den im Hinblick auf die Funktionalität der abgasliefernden Brennkraftmaschine maximal zulässigen Abgasgegendruck begrenzt ist.

2. Kombinierte Abgasnachbehandlungs-/Schalldämpfungsvorrichtung nach Anspruch 1, **dadurch gekennzeichnet, dass** der Vorkatalysator (15) eine kreiszylindrische Form mit einer Abmessung = Durchmesser x Länge von 220 x 101,5 mm oder 200 x 101,5 mm - jeweils bei einer Zelligkeit von 160 oder 200 cpsi - oder 180 x 101,5 mm bei einer Zelligkeit von 160 cpsi und außerdem eine Platinbeschichtung in der Größenordnung von 5 g /1000 Nm³/h Abgasvolumenstrom, also etwa 1,0 bis 1,5 g / Liter Volumen aufweist.

3. Kombinierte Abgasnachbehandlungs-/Schalldämpfungsvorrichtung nach einem der Ansprüche 1 und 2, **dadurch gekennzeichnet, dass** im Schalldämpfer (10) vier gleiche Partikelabscheider (16) mit jeweils kreiszylindrischer Form für Paralleldurchströmung angeordnet sind, von denen jeder eine Abmessung = Durchmesser x Länge von entweder 150 x 150 mm oder 150 x 225 mm oder 150 x 300 mm jeweils bei einer Zelligkeit von 200 cpsi aufweist.

4. Kombinierte Abgasnachbehandlungs-/ Schalldämpfungsvorrichtung nach einem der Ansprüche 1 und 2, **dadurch gekennzeichnet, dass** im Schalldämpfer (10) drei Partikelabscheider (16) mit jeweils kreiszylindrischer Form für Paralleldurchströmung angeordnet sind, von denen jeder eine Abmessung = Durchmesser x Länge von entweder 150 x 150 mm bei einer Zelligkeit von 200 cpsi aufweist.

5. Kombinierte Abgasnachbehandlungs-/Schalldämpfungsvorrichtung nach einem der Ansprüche 1 und 2, **dadurch gekennzeichnet, dass** im Schalldämpfer (10) außer dem einen Vorkatalysator (15) ein Partikelabscheider (16) mit kreiszylindrischer Form angeordnet ist, der eine Abmessung = Durchmesser x Länge von entweder 254 x 150 mm oder 220 x 225 mm - jeweils bei einer Zelligkeit von 200 cpsi - oder 220 x 150 mm bei einer Zelligkeit von 160 cpsi aufweist.

6. Kombinierte Abgasnachbehandlungs-/Schalldämpfungsvorrichtung nach Anspruch 1, **gekennzeichnet durch** die Kombination eines V-Kat (15) mit einem oder mehreren PM-Abscheider(n) (16) mit jeweiligen Detailmerkmalen wie für jede der Varianten 1 bis 10 in Fig. 9 angegeben, wobei sich die Werte der Kanalgeschwindigkeit KG und der Konversion in allen Varianten 1 bis 10 auf der Basis eines den Versuchen zugrundeliegenden maximalen Abgas-Volumenstromes von 1200 Nm³/h und einer Rohpartikelemission des vom Dieselmotor produzierten Abgases in der Größenordnung von etwa 40 mg/KWh beim ESC-Test und von etwa 50 mg/KWh beim ETC-Test ergaben.

## Claims

1. Combined exhaust-gas aftertreatment/sound-attenuation device in the exhaust-system branch of an internal combustion engine, particularly a diesel engine in a commercial vehicle such as a truck or bus, with a silencer spatially limited by a front and rear wall and a circumferential external wall and containing at least one pre-oxidising catalytic converter which significantly increases the NO₂ proportion in the exhaust gas flowing through said silencer and at least one - particularly catalytic - particulate separator are installed, whereby exhaust gas to be aftertreated can be conducted into the silencer via an inlet pipe and, after flowing through the pre-oxidising catalytic converter and/or the particulate separator(s), can again be conducted out of said silencer, the exhaust gases then being clean and indirectly sound attenuated, **characterised in that**
• that the free exhaust-gas inlet face of the pre-oxidising catalytic converter (15) is significantly smaller than the free exhaust-gas inlet face of the particulate separator(s) (16),
• that the aspect ratio AR = I / Ø_{eff} for the pre-oxidising catalytic converter (15) lies between 0.4 and 0.6,
• that the aspect ratio AR = I / Ø_{eff} for the particulate separator (16) lies between 0.5 and 1.0,
• that the volume of the pre-oxidising catalytic converter (15) lies between approximately 2.5 and 4 litres, the volume of the/all particulate separator(s) (16) lies between approx. 5.5 and 22 litres and the ratio of the volume of the pre-oxidising catalytic converter to the volume of the/all particulate separator(s) lies between approx. 0.15 and 0.55,
• that the relation of the aspect ratio of the particulate separator(s) (16) to the aspect ratio of the pre-oxidising catalytic converter (15) lies between approx. 1.05 and 2.2, and
• that at maximum exhaust-gas volume flow rate [Nm³/h] the duct velocity in the pre-oxidising catalytic converter (15) is more than 8 m/sec and more than 5 m/sec in the particulate separator(s) (16), whereby the maximum exhaust-gas volume flow is limited by the maximum permissible pressure loss and the maximum exhaust back pressure permissible in respect of the functioning of the internal combustion engine supplying the exhaust gases.

2. Combined exhaust-gas aftertreatment/sound-attenuation device according to Claim 1, **characterised in that** the pre-oxidising catalytic converter (15) has a circular-cylindrical shape with a dimension = diameter x length of 220 x 101.5 mm or 200 x 101.5 mm - each with a cellularity of 160 or 200 cpsi - or 180 x 101.5 mm with a cellularity of 160 cpsi and also has a platinum coating in the order of 5 g / 1000 Nm³/h exhaust-gas volume flow, which is approx. 1.0 to 1.5 g / litre by volume.

3. Combined exhaust-gas aftertreatment/sound-attenuation device according to one of the Claims 1 to 2, **characterised in that** four identical particulate separators (16), each of circular-cylindrical shape, are arranged in the silencer (10) for parallel flow, each of which particulate separators (16) has a dimension = diameter x length of either 150 x 150 mm or 150 x 225 mm or 150 x 300 mm, in each case with a celullarity of 200 cpsi.

4. Combined exhaust-gas aftertreatment/sound-attenuation device according to one of the Claims 1 to 2, **characterised in that** three identical particulate separators (16), each of circular-cylindrical shape, are arranged in the silencer (10) for parallel flow, each of which particulate separators (16) has a dimension = diameter x length of 150 x 150 mm, with a celullarity of 200 cpsi.

5. Combined exhaust-gas aftertreatment/sound-attenuation device according to one of the Claims 1 to 2, **characterised in that** apart from the one pre-oxidising catalytic converter (15) a particulate separator (16) of circular-cylindrical shape is arranged in the silencer (10) and has a dimension = diameter x length of either 254 x 150 mm or 220 mm x 225 mm - in each case with a celullarity of 200 cpsi - or 200 x 150 mm, with a celullarity of 160 cpsi.

6. Combined exhaust-gas aftertreatment/sound-attenuation device according to Claim 1, **characterised by** the combination of a pre-catalytic converter (15) with one or several PM separator(s) (16) with the respective detail features as indicated for each of the variants 1 to 10 in Fig. 9, whereby the values for duct velocity KG and conversion in all variants 1 to 10 were achieved in tests on the basis of a maximum exhaust-gas volume flow of 1200 Nm³/h and a raw-particulate emission of the exhaust gas produced by the diesel engine in the order of approx. 40 mg/KWh in the ESC test and of approx. 50 mg/KWh in the ETC test.

## Revendications

1. Dispositif combiné de post-traitement des gaz d'échappement et d'insonorisation dans la ligne d'échappement d'un moteur à combustion interne, notamment d'un moteur diesel d'un véhicule industriel tel que camion ou bus, comportant un silencieux délimité dans l'espace par des parois frontales avant et arrière ainsi que par une paroi extérieure circonférentielle et à l'intérieur duquel sont montés au moins un catalyseur de préoxydation augmentant de manière significative la teneur en NO₂ dans les gaz d'échappement qui le traversent et au moins un séparateur de particules, notamment catalytique, les gaz d'échappement à traiter ultérieurement pouvant être acheminés dans le silencieux par un tuyau d'entrée et, après avoir traversé le catalyseur de préoxydation ainsi que le ou les séparateurs de particules, être évacués du silencieux, **caractérisé en ce que**
- la section libre d'entrée des gaz d'échappement dans le catalyseur de préoxydation (15) est nettement plus petite que la section libre d'entrée des gaz d'échappement dans le ou les séparateurs de particules (16),
- le rapport d'aspect AR = I / Ø_{eff} du catalyseur de préoxydation (15) est approximativement compris entre 0,4 et 0,6,
- le rapport d'aspect AR = I / Ø_{eff} du ou des séparateurs de particules (16) est approximativement compris entre 0,5 et 1,0,
- le volume du précatalyseur (15) est compris entre environ 2,5 et 4 litres, le volume du ou de tous les séparateurs de particules (16) entre environ 5,5 et 22 litres, et le rapport du volume du précatalyseur / du ou de tous les séparateurs de particules entre environ 0,15 et 0,55,
- la relation rapport d'aspect du séparateur de particules (16) / rapport d'aspect du précatalyseur (15) est comprise entre environ 1,05 et 2,2,
- à débit volumique maximal des gaz d'échappement [Nm³/h], la vitesse du flux est supérieure à 8 m/s dans le catalyseur de préoxydation (15) et supérieure à 5 m/s dans le ou les séparateurs de particules (16), le débit volumique maximal des gaz d'échappement étant limité par la perte de charge maximale admissible et par la contre-pression maximale des gaz d'échappement admissible en rapport avec la capacité de fonctionnement du moteur à combustion interne fournissant lesdits gaz d'échappement.

2. Dispositif combiné de post-traitement des gaz d'échappement et d'insonorisation selon la revendication 1, **caractérisé en ce que** le précatalyseur (15) présente une forme cylindrique circulaire de dimensions = diamètre x longueur de 220 x 110,5 mm ou 200 x 101,5 mm pour une cellularité respectivement de 160 ou 200 cpsi, ou bien de 180 x 101,5 mm pour une cellularité de 160 cpsi et, en outre, un revêtement de platine de l'ordre de 5 g/1000 Nm³/h de débit volumique des gaz d'échappement, soit environ 1,0 à 1,5 g / litre de volume.

3. Dispositif combiné de post-traitement des gaz d'échappement et d'insonorisation selon l'une des revendications 1 et 2, **caractérisé en ce que** sont disposés dans le silencieux (10) quatre séparateurs de particules identiques (16) de forme cylindrique circulaire destinés à être traversés en parallèle et dont chacun présente des dimensions = diamètre x longueur soit de 150 x 150 mm, soit de 150 x 225 mm, ou bien encore de 150 x 300 mm pour une cellularité de 200 cpsi.

4. Dispositif combiné de post-traitement des gaz d'échappement et d'insonorisation selon l'une des revendications 1 et 2, **caractérisé en ce que** sont disposés dans le silencieux (10) trois séparateurs de particules (16) de forme cylindrique circulaire destinés à être traversés en parallèle et dont chacun présente des dimensions = diamètre x longueur de 150 x 150 mm pour une cellularité de 200 cpsi.

5. Dispositif combiné de post-traitement des gaz d'échappement et d'insonorisation selon l'une des revendications 1 et 2, **caractérisé en ce qu'**est disposé dans le silencieux (10), outre le précatalyseur (15), un séparateur de particules (16) de forme cylindrique circulaire présentant des dimensions = diamètre x longueur soit de 254 x 150 mm, soit de 220 x 225 mm pour une cellularité respectivement de 200 cpsi, ou bien encore de 150 x 150 mm pour une cellularité de 160 cpsi.

6. Dispositif combiné de post-traitement des gaz d'échappement et d'insonorisation selon la revendication 1, **caractérisé par** la combinaison d'un précatalyseur (15) et d'un ou de plusieurs séparateurs de particules (16) présentant les caractéristiques détaillées du type de celles indiquées pour chacune des variantes 1 à 10 de la figure 9, les valeurs de la vitesse du flux KG et de la conversion ayant été obtenues dans toutes les variantes 1 à 10 lors d'essais sur la base d'un débit volumique maximal des gaz d'échappement de 1200 Nm³/h et d'une émission de particules brutes dans les gaz d'échappement produits par le moteur diesel de l'ordre d'environ 40 mg/kWh pour l'essai ESC et d'environ 50 mg/kWh pour l'essai ETC.
